# EUROPÄISCHE PATENTSCHRIFT

(11) **EP 2 678 534 B1**
(45) Veröffentlichungstag und Bekanntmachung des Hinweises auf die Patenterteilung: **06.12.2017**
(21) Anmeldenummer: 12706241.2
(22) Anmeldetag: 23.02.2012
(51) Int. Cl.: F01N 1/24, F01N 13/18, F02B 77/13, D04H 1/44, D04H 3/002, D04H 3/004, D04H 3/015, D04H 3/073, D04H 3/115, D04H 3/12, D04H 3/14, B29C 53/56

(54) **SCHALLDÄMPFEREINSATZ FÜR KRAFTFAHRZEUGE UND VERFAHREN ZUR HERSTELLUNG HIERVON**
MUFFLER INSERT FOR MOTOR VEHICLES AND METHOD FOR PRODUCING SAME
ÉLÉMENT DE SILENCIEUX POUR VÉHICULES À MOTEUR ET PROCÉDÉ DE FABRICATION CORRESPONDANT

(30) Priorität: 23.02.2011 DE 102011012202
(43) Veröffentlichungstag der Anmeldung: 01.01.2014
(73) Patentinhaber: DBW Holding GmbH, 37120 Bovenden (DE)
(72) Erfinder: BAUER, Thomas, 66424 Homburg (DE); REGENT, Karl-Christian, 38304 Wolfenbüttel (DE); SCHWERDTFEGER, Martin, 37574 Einbeck (DE)
(74) Vertreter: Kröncke, Rolf
(86) Internationale Anmeldenummer: PCT/EP2012/053073
(87) Internationale Veröffentlichungsnummer: WO 2012/113867

(56) Entgegenhaltungen:
- EP-A1- 1 217 184
- EP-A1- 2 602 370
- WO-A1-01/69051
- WO-A1-99/23367
- WO-A1-2005/005796
- WO-A1-2006/095373
- US-A- 5 926 954
- US-A- 6 094 817
- US-A1- 2009 242 324
- US-B1- 6 241 043

## Beschreibung

Die vorliegende Anmeldung betrifft in einem ersten Aspekt einen Schalldämpfereinsatz für Kraftfahrzeuge, insbesondere für PKW und LKW. Dieser Schalldämpfereinsatz in Form eines Formmaterials aus Glasfasermaterial liegt dabei in gewickelter Form eines Endlosglasfasermaterials vor, wobei das eingesetzte Glasfasermaterial eine effekttexturierte Glasfaser umfasst. In einem weiteren Aspekt richtet sich die Anmeldung auf ein Verfahren zur Herstellung eines solchen Schalldämpfereinsatzes, wobei ein Glasfasermaterial als Endlosglasfaser, die eine effekttexturierte Glasfaser ist, um einen Träger zur Ausbildung eines Formmaterials gewickelt wird und dieses Formmaterial als Schalldämpfereinsatz ggf. nach weiteren Verarbeitungsschritten verwendet wird.

### Stand der Technik

Schalldämpfer weisen schalldämpfende bzw. schallschluckende und isolierende Materialien auf. Üblicherweise werden hierzu Glasfasermaterialien als Fasermaterialien eingesetzt. Alternativ finden andere Mineralfasern wie z.B. Basaltfasern usw. einen Einsatz als schalldämpfende Materialien, insbesondere in Schalldämpfern für Kraftfahrzeuge.
Eine Möglichkeit der Einbringung dieser Fasermaterialien besteht in dem Eindüsen loser Fasern in die Zwischenbereiche eines zusammengesetzten Schalldämpfers. Entsprechende Verfahren sind z.B. in der DE 10 2005 009 045 oder in der EP 953 736 beschrieben. Nachteile solcher Eindüsverfahren liegen in der nicht optimalen Verteilung des Fasermaterials, insbesondere in schwer einzudüsenden Bereichen wie Winkel oder sonstigen Hinterschnitten, sowie in der praktischen Umsetzung des Eindüsverfahrens für bestimmte nicht zylindrische Schalldämpferkonturen, aber auch für sogenannte Halbschalenschalldämpfer.

Als Alternative hierzu werden die Fasermaterialien während des Zusammensetzens des Schalldämpfers eingebaut, d.h. die Fasermaterialien werden in das Schalldämpfergehäuse vordem Verschließen eingebracht. Hierbei kann das Einbringen über verschiedene Verfahren erfolgen. So ist ein übliches Verfahren das Einbringen losen Fasermaterials, insbesondere Glasfasermaterials, gefüllt in Bags, d.h. in Plastiksäcken, die bei der Montage in die Schalldämpfer eingelegt werden. Üblicherweise sind diese Plastiksäcke, die auch als Netz ausgeführt sein können, aus einem Kunststoff bzw. einer Kunststoffmatrix ausgebildet, wobei der Kunststoff bei höheren Temperaturen schmilzt. Bei erster Inbetriebnahme des Schalldämpfers mit entsprechendem Erwärmen des Schalldämpfers schmilzt dieser Kunststoff und gibt das lose Glasfasermaterial frei. Ein großer Nachteil dieses Verfahrens ist aber, dass durch das Schmelzen bzw. Verkohlen des Plastikmaterials ein unangenehmer Geruch auftritt und die Umwelt belastet wird. Ein weiterer Nachteil der Verwendung von in Säcken gefüllten losen Glasfasern ist, dass komplexe Strukturen im Schalldämpfer nicht ausreichend durch die Fasern gefüllt werden können. Außerdem kann ein Verschieben des Schalldämmmaterials erfolgen, so dass die akustischen aber auch thermischen Eigenschaften des Glasfasermaterials verschlechtert sind. Außerdem kann das lose Glasfasermaterial über die Zeit ausgeblasen werden, so dass neben der akustischen und thermischen Verschlechterung auch eine Belastung der Umwelt erfolgen kann.

In einem alternativen Verfahren werden Matten aus Glasfasermaterialien als Einlage in den Schalldämpfer eingelegt. Anschließend wird der Schalldämpfer geschlossen. Dieser Einlagen können durch Schmelzfäden verdichtet sein, wie in der WO 99/23367 beschrieben. Diese Schmelzfäden sind dabei derart aus gestaltet, dass beim ersten Erwärmen des Schalldämpfers ausschmelzen und so die Einlage sich vollständig in den Freiräumen des Schalldämpfers ausbreiten kann.

Aus der EP 1 861 592 wird ein Verfahren zum Füllen von Schalldämpfern von Verbrennungsmotoren mit schalldämpfendem Material beschrieben. Das Material ist dabei aus Glasfasern ausgeformt und umfasst ein Aufwickeln der Glasfaserfäden um ein Rohr oder einen Rollenwickler, um eine rohrförmige Masse aus Glasfasern zu erhalten. Die Masse ist dabei derart ausgebildet, dass sie mit ihren Maßen dem auszufüllenden Raum des Schalldämpfers entsprechen. Die rohrförmige Masse wird nach dem Wickeln von dem Rohr bzw. Rollenwickler entfernt und anschließend in einem zweiten Schritt in einer weiteren Vorrichtung verdichtet, so dass eine verflachte, rohrförmige Masse vorliegt. Diese abgeflachte Masse wird dann durch irreversibel verwobene oder vereinte Glasfasern ausgebildete Verkettungen verfestigt. Anschließend wird der Schalldämpfer geschlossen.

In der DE 202 18 618 U1 werden Schalldämpfereinsätze beschrieben, die mit Hilfe von Bindemitteln und thermischer Behandlung gefertigt werden.

US 5,926,954 beschreibt einen Schalldämpfer, sowie ein Verfahren zu dessen Herstellung. Zur Herstellung eines Schalldämpfers wird ein texturiertes Fasergarn unter Zug auf ein perforiertes Schalldämpferinnenrohr ein- oder mehrlagig fest aufgewickelt. Zwischen den einzelnen Lagen des aufgewickelten Fasergarns wird mindestens ein Septum als Trennwand eingeführt und auf diese Weise ein Schalldämpfer erzeugt. Als texturiertes Fasergarn wird bevorzugt Glasfasermaterial und besonders bevorzugt E-Glas, S-Glas oder ECR-Glas eingesetzt.

Ein Ziel neuer Formmaterialien, wie Formmatten oder Formkörper, als Schalldämpfereinsätze in Schalldämpfern für PKW und LKW ist die Notwendigkeit, die Menge an eingesetztem Material zu verringern, um einen Leichtbau zu fördern. Dieser Leichtbau erlaubt eine Verringerung des Kraftstoffverbrauchs. Des Weiteren soll die Dichten innerhalb des Materials des Schalldämpfereinsatzes variabel gestaltbar sein und der Schalldämpfereinsatz selbst in den Schalldämpfer einfach einbringbar sein. Die Herstellung selbst sollte ökologisch verbessert sein und insbesondere sollte bei Gebrauch keine oder nur sehr geringe Emission gesundheitsschädigender Stoffe erfolgen, wie sie derzeit bei der Verwendung von Säcken gefüllt mit losem Glasfasermaterial auftritt. Das Verfahren zur Herstellung dieser Schalldämpfereinsätze sollte einfach durchfühbar sein und die Schalldämpfereinsätze selbst sollen verbesserte Eigenschaften insbesondere auch im Betrieb aufzeigen. Hierzu gehören eine verbesserte akustische Wirkung, eine Gewichtsreduktion sowie eine bessere Volumenfüllung. Weiterhin besteht Bedarf an Schalldämpfereinsätzen mit verbesserter Ausblassicherheit, d.h. keinem Ausblasen von Glasfasern im Betrieb, sowie verbesserter Formstabilität, um die akustischen und thermischen Eigenschaften zu bewahren.

Der Erfindung liegt daher die Aufgabe zugrunde, einen gattungsgemäßen Schalldämpfereinsatz für Kraftfahrzeuge sowie ein Verfahren zur Herstellung hierfür bereitzustellen, wobei dieser Schalldämpfereinsatz verbesserte Eigenschaften im Betrieb unter gleichzeitig verbesserten ökonomischen und ökologischen Gesichtspunkten bereitstellt.

Insbesondere soll die Erfindung Schalldämpfereinsätze bereitstellen, die mit möglichst geringem Materialaufwand die gewünschten akustischen und isolierenden Eigenschaften bereitstellt, wobei gleichzeitig eine reduzierte Emission und Umweltbelastung erreicht wird. Dabei weist dieser Schalldämpfereinsatz eine große Formstabilität auch im Betrieb auf und ein relatives Verschieben der Fasern im Formmaterial zueinander sowie ein Ausblasen von Glasfasern sollen minimiert sein, um die thermischen und akustischen Eigenschaften des Materials beizubehalten.

Die Aufgabe der Erfindung wird erfindungsgemäß durch einen gattungsgemäßen Schalldämpfereinsatz gelöst. Dieser zeichnet sich dadurch aus, dass das Glasfasermaterial ein Endlosglasfasermaterial ist, wobei dieses Glasfasermaterial eine effekttexturierte Glasfaser ist.

### Beschreibung der Erfindung

In einem ersten Aspekt richtet sich die Erfindung auf einen Schalldämpfereinsatz für Kraftfahrzeuge wie in Anspruch 1 beschrieben, insbesondere für PKW und LKW mit Verbrennungsmotoren, aus einem Glasfasermaterial und/oder anderen Mineralfasermaterial. Dieses Glasfasermaterial und/oder anderen Mineralfasermaterial liegt dabei in Form eines gewickelten Formmaterials erhältlich durch Wickeln des Glasfasermaterials und/oder anderen Mineralfasermaterial um mindestens einen Träger vor. Der erfindungsgemäße Schalldämpfereinsatz zeichnet sich dadurch aus, dass das Glasfasermaterial und/oder andere Mineralfasermaterial ein Endlosmaterial ist und weiterhin das Glasfasermaterial und/oder andere Mineralfasermaterial eine texturierte Glasfaser und/oder andere texturierte Mineralfaser ist.
Im Folgenden wird unter dem Ausdruck "Glasfasermaterial" sowohl Material aus Glasfasern als auch Material aus Glasfasern und anderen Mineralfasern, wie Basaltfasern oder Basaltwolle, soweit nicht anders ausgeführt, verstanden.
Vorliegend bedeutet der Ausdruck "texturiert", dass die Glasfaser und/oder andere Mineralfaser, die als Roving, Garn oder Zwirn, insbesondere aber als Filament, vorliegt, mit Hilfe von bekannten Verfahren geöffnet wird. Texturierte Glasfasern sind im Stand der Technik bekannt.
Texturierte Fasern zeichnen sich dadurch aus, dass durch das Öffnen der Fasern eine Volumenvergrößerung erreicht wird. Die so texturierten Fasern zeigen aufgrund ihrer Fülligkeit verbesserte thermische und akustische Eigenschaften auf.
Üblicherweise werden texturierte Fasern durch Luftblasverfahren hergestellt.

Hierdurch können unterschiedliche Texturierungsniveaus und damit unterschiedliche Dichten des Glasfasermaterials erreicht werden. Erfindungsgemäss handelt es sich bei dem Glasfasermaterial um eine effekttexturierte Glasfaser. Unter dem Ausdruck "effekttexturierte Glasfaser" wird vorliegend verstanden, dass um ein Kern- oder Basisfaden bzw. Roving ein zweiter Faden bzw. Roving (Hauptfaden) umwickelt wird. Sowohl der umwickelte als auch der Basisfaden können dabei entsprechend texturiert sein, d.h. geöffnet vorliegen. Bei dem Glasfasermaterial handelt es sich bevorzugt um ein nicht gedrehtes Material, wie Roving und Endlosfilament. Aber auch Garne und Zwirne, bei denen es sich um gedrehte bzw. verzwirnte Materialien handelt, können in effekttexturierter Form verwendet werden.
Erfindungsgemäß kann der Basisfaden auch ein Schmelzfaden oder Baumwollfaden sein oder enthalten, der bei Erwärmung verkohlt oder schmilzt. Solche Ausführungsformen werden von dem Ausdruck "Glasfaser" bzw. "Mineralfaser" ebenfalls umfasst.
In einer weiteren Ausführungsform der vorliegenden Erfindung wird das Formmaterial durch Wickeln des Glasfasermaterials um mindestens zwei Träger erhalten. Die mindestens zwei Träger sind dabei in einer Art ausgebildet, dass sie bevorzugt verschiebbar sind, um entsprechendes Formmaterial als Wickelrohlinge unterschiedlicher Dimensionierung herstellen zu können. Das Fasermaterial kann dabei auch um mindestens drei oder mehr Träger gewickelt werden, um Formmaterial in Form von Körpern, insbesondere Hohlkörpern, herzustellen. Diese mindestens drei Träger, die voneinander beabstandet sind, sind bevorzugt verschiebbar, um eine unterschiedliche Dimensionierung des erhaltenen Formmaterials zu erlauben. Die Träger können dabei als Stäbe oder Rohre ausgebildet sein. Alternativ können die Träger auch Bleche oder anders dimensionierte Träger darstellen. Wenn nur ein Träger verwendet wird, ist dieser bevorzugt als Zylinder, der gegebenenfalls hohl ist, ausgebildet. Die Träger können auch einen diskontinuierlichen Durchmesser aufweisen. Die Träger können weiterhin gerade sein oder gebogen vorliegen, um dem Formmaterial eine vorgegebene Form zu geben. Die Träger, wie entsprechende Stäbe, können dabei entsprechend so gebogen und in ihren Durchmesser diskontinuierlich dimensioniert sein, so dass dem Wickelrohling eine entsprechend gewünschte Struktur und Form verliehen wird.

Aufgrund der Texturierung der Glasfaser bzw. der anderen Mineralfaser, insbesondere aufgrund der Effekttexturierung der Glasfaser, ist es möglich Wickelrohlinge als gewickeltes Formmaterial aus Glasfasermaterial bereitzustellen, das durch ein Verhaken bzw. Interagieren mit nebenliegenden Fasern ein Aufreißen der Wickelstruktur und somit eine Verschlechterung der thermischen und akustischen Eigenschaften im Betrieb verhindern. Das Verschieben der Glasfasern, wodurch ein Anhäufen bzw. eine Lückenbildung in dem Formmaterial auftreten kann, hervorgerufen z.B. durch Erschütterungen und Vibrationen im Betrieb, wird dadurch reduziert und die gewünschten Eigenschaften des Schalldämpfereinsatzes sind über die Betriebszeit verbessert.

In einer anderen bevorzugten Ausführungsform wird das Formmaterial in Form eines Wickelrohlings weiter dauerhaft verfestigt, um ein verfestigtes Formmaterial auszubilden. Bevorzugt findet dieses anschließende Verfestigen des Wickelrohlings auf den Trägern statt. Durch die Verfestigung bleibt die Struktur bzw. Form entsprechend erhalten, da der Wickelrohling noch auf den formgebenden Trägern während des Verfestigens verbleibt. Entsprechend einfach ist es möglich, dem Wickelrohling eine dauerhafte Form in Form einer Formmatte oder eines Formkörpers, insbesondere auch in Form eines Hohlkörpers, zu verleihen. Ein Verfestigen erfolgt ohne Bindemittel. Diese Bindemittel erfordern eine zusätzliche thermische Behandlung und sind aus ökonomischer wie ökologischer Sicht unvorteilhaft.

Mit Hilfe des erfindungsgemäßen Schalldämpfereinsatzes können auch komplizierte gewünschte Formen der Dämpferkammer in dem Schalldämpfer durch das Formmaterial ausgefüllt werden. Entsprechend ist es möglich Schalldämpfereinsätze (Halbzeuge bzw. Bauteile) herzustellen, bei denen die eingesetzte Menge an Fasermaterial reduziert ist, um so einen Leichtbau zu erlauben. Dieser Leichtbau hat zur Konsequenz, dass ökologische Vorteile wie ein Erniedrigen des Kraftstoffverbrauches usw. erzielt werden. Des Weiteren wird durch die Verwendung der texturierten Faser, die als Endlosmaterial eingesetzt wird, eine hervorragende Dimensionsstabilität erhalten.

Eine mögliche, weitere Verfestigung des in Form eines Wickelrohlings erhaltenen vorliegenden Formmaterials kann dabei mittels Luftverwirbelung, Vernähen, Verketten, Verknoten, Vernadeln, Verfilzen oder Verhäkeln erfolgen, bevorzugt findet dabei die Verfestigung des Wickelrohlings direkt auf dem Träger statt. Es ist aber auch bevorzugt, dass das Formmaterial keinerlei zusätzliche Verfestigung aufweist und dabei seine Dimensionsstabilität behält. Der Schalldämpfereinsatz weist dabei keine Bindemittel auf.

Die Verfestigung, insbesondere eine endlose Verfestigung, ist bevorzugt dauerhaft ausgestaltet. Unter dem Ausdruck "dauerhaft" wird vorliegend verstanden, dass die Verfestigung zumindest so lange anhält, bis der Schalldämpfereinsatz verbaut und der Schalldämpfer geschlossen vorliegt. Ggf. kann bei Verwendung entsprechender Materialien, wie Schmelzfaden oder Baumwollfaden, mit niedrigen Schmelz- oder Zerstörungstemperaturen, ein zumindest teilweises Auflösen der Verfestigung nach dem Einbau erfolgen, so dass der Schalldämpfereinsatz die Dämpferkammer innerhalb des Gehäuses vollständig ausfüllen kann.

In einer Ausführungsform ist die Verfestigung aber bevorzugt mindestens teilweise auch in Betrieb permanent, um die Dimensionsstabilität und Faserstabilität relativ zur Nutzung zu gewährleisten. Erfindungsgemäß kann der Schalldämpfereinsatz weiter durch Schnüren in eine gewünschte Form gebracht werden. Dieses Schnüren erfolgt bevorzugt mit einem Schmelzfaden oder Baumwollfaden, um den Schalldämpfereinsatz für den Einbau in den Schalldämpfer in eine bevorzugte Form zu bringen. Diese wird bei Inbetriebnahme des Schalldämpfers wieder aufgehoben. Eine entsprechende Schnürung erlaubt somit einen einfachen Einbau des Schalldämpfereinsatzes in die Dämpferkammer. Bei Auflösung der Schnürung kann dann die Dämpferkammer durch den Schalldämpfereinsatz vollständig ausgefüllt werden. Dem Fachmann sind geeignete Materialien und Verfahren bekannt.
Der erfindungsgemäße Schalldämpfereinsatz zeichnet sich dadurch aus, dass er kein Bindemittel aufweist. Dadurch können Verfahrensschritte bei der Herstellung vermieden werden. Genauso können die Herstellungskosten aber auch die Umweltbelastung im Betrieb verringert werden. Das gewickelte Formmaterial ist durch Wickeln des Glasfasermaterials um mindestens einen Träger erhältlich. Bevorzugt ist das Fasermaterial dabei schraubenförmig, insbesondere mit einer Steigung von >3% gewickelt. Durch entsprechende Führung des Läufers beim Wickeln können entsprechende Wickelrohlinge erhalten werden. In einer alternativen Ausführungsform können die Fasern im Wesentlichen parallel geführt sein. Die Fasern können ein- oder bevorzugt mehrlagig gewickelt sein, wobei die Wicklung auch gegenläufig sein kann, wie sie dem Fachmann schon bekannt sind.

Die erfindungsgemäßen Schalldämpfereinsätze aus effekttexturierter Glasfaser bzw. effekttexturierten anderen Mineralfasern, zeichnen sich durch eine Gewichtsreduktion, bessere Volumenfüllung, bessere thermische und akustische Wirkung aus. Das Handling des Schalldämpfereinsatzes beim Einbau in den Schalldämpfer ist aufgrund der Dimensionsstabilität verbessert. Das Produkt weist eine angenehme Haptik beim Verbauen auf. Insbesondere durch den Einsatz von Endlosfasermaterial ist eine Belastung der Arbeiter durch kleine Glasfaserstücke verringert. Durch Einsatz des Endlosmaterials ist weiterhin die Dimensionsstabilität des Schalldämpfereinsatzes in sich verbessert. Es findet kein Verschieben des Fasermaterials im Schalldämpfer statt, so dass die akustischen und thermischen Eigenschaften des Schalldämpfermaterials im Betrieb erhalten bleiben. Schließlich weist durch die Verwendung von Endlosmaterial und aufgrund der Verkettung bzw. des Verhakens der texturierten Fasern miteinander dieser Schalldämpfereinsatz verbesserte Sicherheit gegenüber einem Aufblasen von Glasfasern auf. Dies wird insbesondere auch ohne weitere Arbeitsschritte, wie ein Vernadeln, erzielt.
Entsprechend weisen die erfindungsgemäßen Schalldämpfereinsätze sowohl ökologische als auch ökonomische Vorteile gegenüber bekannten Schalldämpfereinsätze auf.
In einem weiteren Aspekt betrifft die vorliegende Anmeldung ein Verfahren zur Herstellung eines Schalldämpfereinsatzes für Schalldämpfer, wie in den Ansprüchen definiert, insbesondere für kraftstoffbetriebene PKW- und LKW-Schalldämpfer, wobei dieser Schalldämpfereinsatz ein schalldämpfendes, schallschluckendes oder isolierendes Formmaterial aus Glasfasermaterial umfasst. Das erfindungsgemäße Verfahren umfasst die folgenden Schritte: Wickeln des Glasfasermaterials um mindestens einen Träger zur Herstellung eines schalldämpfenden, schallschluckenden oder isolierenden Formmaterials in Form eines Wickelrohlings, wobei das Glasfasermaterial ein Endlosglasfasermaterial ist und die Glasfaser eine effekttexturierte Glasfaser, ist. Besonders bevorzugt wird in diesem Verfahren ein einsträngiges effekttexturiertes Endlosfilament eingesetzt.
Das erfindungsgemäße Verfahren wird bevorzugt derart durchgeführt, dass das Glasfasermaterial um mindestens zwei Träger gewickelt wird. In einer weiteren Ausführungsform können mindestens drei oder mehr Träger eingesetzt werden.

Die Träger können dabei solche sein, wie oben beschrieben.
Die Wicklung des Glasfasermaterials kann dabei schraubenförmig, insbesondere mit einer Steigung von 3% erfolgen. Alternativ kann eine im Wesentlichen parallel geführte Wicklung vorliegen. Das Verfahren kann dabei zur Herstellung von gewickeltem Formmaterial als Endlosformmaterial ausgebildet sein. Alternativ erlaubt das erfindungsgemäße Verfahren die Ausbildung von Formmaterial definierter Dimension. Insbesondere ist es möglich passgenaue Formmaterialien, wie Formmatten oder Formkörper bereitzustellen. Die so hergestellten Körper können dabei rotations- oder nichtrotationssymmetrische Teile sein.
Bei der Herstellung eines Endlosformmaterials kann das Produkt als Rollenware aufgewickelt werden oder durch eine entsprechende Einrichtung auf die gewünschte Endkontur geschnitten werden. Das Schneiden kann dabei in einem vorgegebenen Winkel oder auch mit einer anderen Kontur erfolgen. Auch die Art der Wicklung, die Dichte der Wicklung und ggf. eine anschließende Verfestigung können das Volumen des hergestellten Schalldämpfereinsatzes beeinflussen. Durch Fasermaterial, wobei effekttexturierte Materialien Verwendung finden, bei denen ein Hauptfaden spannungsfrei um einen Basisfaden texturiert ist, wird ein positiver Einfluss auf die Voluminisierung erreicht.
In einer Ausführungsform der vorliegenden Erfindung kann das Verfahren weiterhin den Schritt des dauerhaften Verfestigens des auf den Trägern vorliegenden Wickelrohlings zur Ausbildung eines schalldämpfenden, schallschluckenden oder isolierenden Formmaterials umfassen. Dies so erhaltene Formmaterial kann in einem weiteren Schritt durch Schnüren in eine gewünschte Form gebracht werden, wie oben ausgeführt. Das dauerhafte Verfestigen ist eine Art der Verfestigung, die ohne Bindemittel durchgeführt wird.
Schließlich wird erfindungsgemäß ein Schalldämpfer mit einem erfindungsgemäßen Schalldämpfereinsatz bereitgestellt. Dieser Schalldämpfereinsatz kann mit Hilfe des erfindungsgemäßen Verfahrens erhältlich sein.
Die Herstellung des Schalldämpfereinsatzes kann dabei mit einer Vorrichtung erfolgen, die ein Wickeln unter gleichzeitiger Texturierung der Glasfaserfäden, insbesondere des Rovings oder Monofilamentes, erlaubt. Dadurch ist es möglich, in einem Verfahren in Schritt d) die erfindungsgemäßen Schalldämpfereinsätze aus effekttexturierten Glasfasern herzustellen.

## Patentansprüche

1. Schalldämpfereinsatz für Kraftfahrzeuge, insbesondere PKW und LKW mit Verbrennungsmotoren, aus einem Glasfasermaterial und/oder anderen Mineralfasermaterial, wobei das Glasfasermaterial und/oder andere Mineralfasermaterial in Form eines gewickelten Formmaterials erhältlich durch Wickeln des Glasfasermaterials und/oder anderen Mineralfasermaterials um mindestens einen Träger vorliegt und das Glasfasermaterial und/oder andere Mineralfasermaterial ein Endlosmaterial, insbesondere ein Endlosfilament, ist wobei das gewickelte Formmaterial in Form einer Formmatte oder Formkörpers vorliegt, wobei das Formmaterial kein Bindemittel aufweist, **dadurch gekennzeichnet, dass** das Glasfasermaterial und/oder andere Mineralfasermaterial eine effekttexturierte Glasfaser und/oder andere effekttexturierte Mineralfaser umfasst.

2. Schalldämpfereinsatz nach Anspruch 1, **dadurch gekennzeichnet, dass** das Formmaterial in einer Form erhältlich durch Wickeln des Glasfasermaterials und/oder anderen Mineralfasermaterials um mindestens zwei Träger vorliegt.

3. Schalldämpfereinsatz nach einem der vorherigen Ansprüche, **dadurch gekennzeichnet, dass** das so in Form eines Wickelrohlings erhaltene Formmaterial weiterhin dauerhaft verfestigt zur Ausbildung eines verfestigten Formmaterials vorliegt.

4. Schalldämpfereinsatz nach Anspruch 3, **dadurch gekennzeichnet, dass** die Verfestigung mittels Luftverwirbelung, Vernähen, Verketten, Verknoten, Vernadeln, Verfilzen oder Verhäkeln ist.

5. Schalldämpfereinsatz nach einem der Ansprüche 1 bis 3, **dadurch gekennzeichnet, dass** das Formmaterial keinerlei zusätzliche Verfestigung aufweist.

6. Schalldämpfereinsatz nach Anspruch 1, **dadurch gekennzeichnet, dass** das Basisgarn des effekttexturierten Glasfasermaterials und/oder anderen effekttexturierten Mineralfasermaterials ein Schmelzfaden enthalten kann oder mindestens eine Faser des Glasfasermaterials und/oder anderen Mineralfasermaterials ein Schmelzfaden ist.

7. Verfahren zur Herstellung eines Schalldämpfereinsatzes für Schalldämpfer, insbesondere für Schalldämpfer für Pkw und Lkw mit Verbrennungsmotoren, wobei dieser Schalldämpfereinsatz ein schalldämpfendes, schallschluckendes oder isolierendes Formmaterial aus Glasfasermaterial und/oder anderen Mineralfasermaterial, wobei das Glasfasermaterial und/oder andere Mineralfasermaterial ein Endlosglasfasermaterial und/oder anderes Endlosmineralfasermaterial ist umfassend die folgenden Schritte:
- Wickeln des Glasfasermaterials und/oder anderen Mineralfasermaterials um mindestens einen Träger zur Herstellung eines schalldämpfenden, schallschluckenden oder isolierenden Formmaterials in Form eines Wickelrohlings,
- wobei der Wickelrohling eine dauerhafte Form in Form einer Formmatte oder eines Formkörpers aufweist und
- wobei kein Bindmittel bei der Herstellung des Schaldämpfereinsatzes verwendet wird,
**dadurch gekennzeichnet, dass** das Glasfasermaterial und/oder andere Mineralfasermaterial eine effekttexturierte Glasfaser und/oder andere effekttexturierte Mineralfaser umfasst.

8. Verfahren nach Anspruch 7, **dadurch gekennzeichnet, dass** das Endlosmaterial ein einsträngiges Endlosfilament ist.

9. Verfahren nach einem der Ansprüche 7 oder 8, **dadurch gekennzeichnet, dass** das Glasfasermaterial und/oder andere Mineralfasermaterial um mindestens zwei Träger gewickelt wird.

10. Verfahren nach einem der Ansprüche 7 bis 9, **dadurch gekennzeichnet, dass** es weiterhin den Schritt eines dauerhaften Verfestigens des auf den Trägern vorliegenden Wickelrohlings zur Ausbildung eines schalldämpfenden, schallschluckenden oder isolierenden Formmaterials umfasst, insbesondere durch Verfestigung mittels Luftverwirbelung, Vernähen, Verketten, Verknoten, Vernadeln, Verfilzen oder Verhäkeln.

11. Schalldämpfer mit einem Schalldämpfereinsatz nach einem der Ansprüche 1 bis 6 oder einen Schalldämpfereinsatz erhältlich nach einem Verfahren nach einem der Ansprüche 7 bis 10.

## Claims

1. A muffler insert for motor vehicles, in particular passenger cars and motor trucks with internal combustion engines, made from a glass fiber material and/or other mineral fiber material, the glass fiber material and/or other mineral fiber material being obtainable in the form of a wound shaped material by the glass fiber material and/or other mineral fiber material being wound around at least one carrier, and the glass fiber material and/or other mineral fiber material is a continuous material, in particular a continuous filament, the wound shaped material is in form of a shaped mat or moulding and the shaped material has no binder, **characterized in that** the glass fiber material and/or other mineral fiber material comprises a fancy-textured glass fiber and/or other fancy-textured mineral fiber.

2. The muffler insert as claimed in claim 1, **characterized in that** the shaped material is in a form obtainable by the glass fiber material and/or other mineral fiber material being wound around at least two carriers.

3. The muffler insert as claimed in one of the preceding claims, **characterized in that,** furthermore, the shaped material thus obtained in the form of a wound blank is permanently consolidated in order to form a consolidated shaped material.

4. The muffler insert as claimed in claim 3, **characterized in that** consolidation is by means of air swirling, stitching, interlinking, knotting, needling, felting or crocheting.

5. The muffler insert as claimed in one of claims 1 to 3, **characterized in that** the shaped material has no additional consolidation of any kind.

6. The muffler insert as claimed in claim 1, **characterized in that** the basic yarn of the fancy-textured glass fiber material and/or of other fancy-textured mineral fiber material may contain a melt thread, or at least one fiber of the glass fiber material and/or other mineral fiber material is a melt thread.

7. A method for producing a muffler insert for mufflers, in particular for mufflers for passenger cars and motor trucks with internal combustion engines, this muffler insert comprising a sound-damping, sound-absorbing or insulating shaped material made from glass fiber material and/or other mineral fiber material, comprising the following steps:
- winding of the glass fiber material and/or other mineral fiber material around at least one carrier in order to produce a sound-damping, sound-absorbing or insulating shaped material in the form of a wound blank,
whereby the wound blank is in form of a shaped mat or moulding and whereby no binder is used in the production of the muffler insert, **characterized in that** the glass fiber material and/or other mineral fiber material has a fancy-textured glass fiber and/or other fancy-textured mineral fiber.

8. The method as claimed in one of claim 7, **characterized in that** the continuous material is a single-strand continuous filament.

9. The method as claimed in one of claims 7 or 8, **characterized in that** the glass fiber material and/or other mineral fiber material is wound around at least two carriers.

10. The method as claimed in one of claims 7 to 9, **characterized in that** it comprises, furthermore, the step of permanent consolidation of the wound blank present on the carriers, in order to form a sound-damping, sound-absorbing or insulating shaped material, in particular by consolidation by means of air swirling, stitching, interlinking, knotting, needling, felting or crocheting.

11. A muffler having a muffler insert as claimed in one of claims 1 to 6 or a muffler insert obtainable according to a method as claimed in one of claims 7 to 10.

## Revendications

1. Elément de silencieux pour véhicules à moteur, en particulier des voitures et des camions avec des moteurs à combustion interne, en un matériau en fibre de verre et/ou un autre matériau en fibre minérale, dans lequel le matériau en fibre de verre et/ou l'autre matériau en fibre minérale se présente sous la forme d'un matériau façonné enroulé pouvant être obtenu par enroulement du matériau en fibre de verre et/ou de l'autre matériau en fibre minérale autour d'au moins un support et le matériau en fibre de verre et/ou l'autre matériau en fibre minérale est un matériau sans fin, en particulier un filament sans fin, dans lequel le matériau façonné enroulé se présente sous la forme d'un tapis façonné ou d'un corps façonné, dans lequel le matériau façonné ne présente aucun liant, **caractérisé en ce que** le matériau en fibre de verre et/ou l'autre matériau en fibre minérale comprend une fibre de verre à effet de texture et/ou une autre fibre minérale à effet de texture.

2. Elément de silencieux selon la revendication 1, **caractérisé en ce que** le matériau façonné se présente sous une forme pouvant être obtenue par enroulement du matériau en fibre de verre et/ou de l'autre matériau en fibre minérale autour d'au moins deux supports.

3. Elément de silencieux selon l'une quelconque des revendications précédentes, **caractérisé en ce que** le matériau façonné ainsi obtenu sous la forme d'une ébauche enroulée se présente en outre sous forme durablement consolidée pour la formation d'un matériau façonné consolidé.

4. Elément de silencieux selon la revendication 3, **caractérisé en ce que** la consolidation est effectuée par fluidisation à l'air, couture, chaînage, nouage, aiguilletage, feutrage ou au crochet.

5. Elément de silencieux selon l'une quelconque des revendications 1 à 3, **caractérisé en ce que** le matériau façonné ne présente absolument aucune consolidation supplémentaire.

6. Elément de silencieux selon la revendication 1, **caractérisé en ce que** le fil de base du matériau en fibre de verre à effet de texture et/ou de l'autre matériau en fibre minérale à effet de texture peut contenir un fil fusible ou au moins une fibre du matériau en fibre de verre et/ou de l'autre matériau en fibre minérale est un fil fusible.

7. Procédé de fabrication d'un élément de silencieux pour des silencieux, en particulier pour des silencieux pour des voitures et des camions avec des moteurs à combustion interne, dans lequel cet élément de silencieux est un matériau façonné amortissant les sons, absorbant les sons ou isolant en un matériau en fibre de verre et/ou en un autre matériau en fibre minérale, dans lequel le matériau en fibre de verre et/ou l'autre matériau en fibre minérale est un matériau en fibre de verre sans fin et/ou un autre matériau en fibre minérale sans fin, comprenant les étapes suivantes:
- enrouler le matériau en fibre de verre et/ou l'autre matériau en fibre minérale autour d'au moins un support pour la fabrication d'un matériau façonné amortissant les sons, absorbant les sons ou isolant sous la forme d'une ébauche enroulée,
- dans lequel l'ébauche enroulée présente une forme durable sous la forme d'un tapis façonné ou d'un corps façonné, et
- dans lequel on n'utilise aucun liant lors de la fabrication de l'élément de silencieux,
**caractérisé en ce que** le matériau en fibre de verre et/ou l'autre matériau en fibre minérale comprend une fibre de verre à effet de texture et/ou une autre fibre minérale à effet de texture.

8. Procédé selon la revendication 7, **caractérisé en ce que** le matériau sans fin est un filament sans fin à un seul brin.

9. Procédé selon une des revendications 7 ou 8, **caractérisé en ce que** l'on enroule le matériau en fibre de verre et/ou l'autre matériau en fibre minérale autour d'au moins deux supports.

10. Procédé selon l'une quelconque des revendications 7 à 9, **caractérisé en ce qu'**il comprend en outre l'étape de consolidation durable de l'ébauche enroulée présente sur les supports en vue de la formation d'un matériau façonné amortissant les sons, absorbant les sons ou isolant, en particulier par consolidation par fluidisation à l'air, couture, chaînage, nouage, aiguilletage, feutrage ou au crochet.

11. Silencieux avec un élément de silencieux selon l'une quelconque des revendications 1 à 6 ou un élément de silencieux pouvant être obtenu par un procédé selon l'une quelconque des revendications 7 à 10.
